# EUROPEAN PATENT APPLICATION

(11) **EP 1 630 061 A1**
(43) Date of publication of application: **01.03.2006**
(21) Application number: 04745625.6
(22) Date of filing: 01.06.2004
(51) Int. Cl.: B62B 3/00

(54) **TRANSPORTATION MOTOR VEHICLE AND METHOD OF CONTROLLING THE SAME**

(30) Priority: 02.06.2003 JP 2003156986
(71) Applicant: SONY CORPORATION, Tokyo 141-0001 (JP)
(72) Inventor: KAKINUMA, Takekazu, Shinagawa-ku, Tokyo 141-0001 (JP)
(74) Representative: Körber, Martin Hans
(86) International application number: PCT/JP2004/007906
(87) International publication number: WO 2004/106139

(57) **Abstract**

The present invention relates to a conveyance vehicle in which pulling force or pushing force of someone who conveys the conveyance vehicle by pulling or pushing the conveyance vehicle and a control method thereof.

A conveyance vehicle according to the present invention is composed of two wheels 3L, 3R, two electrically-powered motors 15, 15 for rotating the two wheels 3L, 3R, a conveyance body 2 having the two electrically-powered motors 15, 15 mounted thereon, a handle 6 for applying conveying force to the conveyance body 2, a force sensor 7 for detecting pulling force acting on the handle 6 and a vehicle control unit 5 for driving the electrically-powered motor 15 based on a detected signal from the force sensor 7.

According to the present invention, when force for pulling or pushing the conveyance body is greater than a reference value, it is possible to maintain man's conveying force at a constant value to thereby alleviate load imposed on someone by assisting the conveying power with an amount of force exceeding the reference value.

## Description

### TECHNICAL FIELD

The present invention relates to a conveyance vehicle in or by which something is carried or someone travels and a control method thereof, and particularly to a conveyance vehicle in which pulling force or pushing force of someone who pulls or pushes the conveyance vehicle can be made constant a control method thereof.

### BACKGROUND ART

As a conveyance vehicle for conveying something, there is so far known a conveyance vehicle described in Cited Patent Reference 1, for example. Cited Patent Reference 1 has described a handcart type conveyance vehicle with a handle by which it is pushed by a walking operator. This handcart type conveyance vehicle is composed of a vehicle body including a handle pushed or pulled by a walking operator and an item carrying portion, a running portion for supporting this vehicle body so that this vehicle body can run, an electrically-powered motor for driving the running portion and a control apparatus for controlling driving of the electrically-powered motor by an electric signal outputted in response to an operated amount of the hand which can be attached to the item carrying portion so as to become rotatable in the pushing or pulling direction. The control apparatus stops rotation of the electrically-powered motor when the operated amount of the handle lies at the neutral area at both pushing and pulling sides of the neutral position. When the operated amount reaches a set amount exceeding the neutral area, this control apparatus can drive the electrically-powered motor at a constant speed and it can vary and adjust a constant speed value of the electrically-powered motor.

Cited Patent Reference 1:
Official Gazette of Japanese laid-open patent application No. 2001-106082 (pages 2 to 3, FIG. 1)

However, since the above-mentioned conveyance vehicle has the arrangement in which a conveyance speed is adjusted by operating the handle, not only it is cumbersome to adjust a speed but also a detection mechanism for detecting the operated amount is required. Thus, it is unavoidable that the apparatus becomes large in size on the whole and that a manufacturing cost is increased. Also, since the operation direction of the handle is limited, there is a problem in which the conveyance vehicle may not be used in the difference in level of the ground surface, steps and the like.

In view of the above-mentioned problems encountered with the prior art, an object of the present invention is to provide a conveyance vehicle and a control method thereof in which pulling force or pushing force of a conveyance body is detected and in which when conveying force exceeds a reference value, power may be assisted by an amount of such exceeding force so that man's conveying force may be maintained at a constant value, thus resulting in load applied to someone being alleviated.

### DISCLOSURE OF THE INVENTION

In order to solve the above-described problems and in order to attain the above-described objects, a conveyance vehicle according to the claim 1 of the present application is composed of one or more than two wheels, rotation drive means for rotating the one or more than two wheels, a conveyance body having the rotation drive means mounted thereon, a handle for applying conveying force to the conveyance body, force detecting means for detecting conveying force acting on the handle and drive control means for controlling driving of the rotation drive means based on a detected signal from the force detecting means.

In a conveyance vehicle according to the claim 2 of the present application, the wheels are composed of two drive wheels located on the same axis at both left and right sides of the conveyance body and one or two auxiliary wheels located at the front side or back side of the two drive wheels.

In a conveyance vehicle according to the claim 3 of the present application, the handle is provided on the upper portion of the conveyance body so as to project in the upper direction, the force detecting means being provided on the upper portion of the handle.

In a conveyance vehicle according to the claim 4 of the present application, the wheels have radiuses larger than steps of a ground surface.

In a conveyance vehicle according to the claim 5 of the present application, the force detecting means is either an electrostatic capacity sensor of which electrostatic capacity is changed in response to magnitude of the conveying force or a strain sensor of which strain amount is changed in response to magnitude of strain.

In a conveyance vehicle according to the claim 6 of the present application, the force detecting means includes a force sensor for detecting pulling force acting on the handle and a force sensor for detecting pushing force acting on the handle.

In a conveyance vehicle according to the claim 7 of the present application, the drive control means includes memory means for previously storing therein a previously-set reference value which becomes at least one standard of pulling force and pushing force acting on the handle and control means for making pulling force or pushing force become a reference value by comparing a detected signal based on at least one detected signal of a pulling force sensor for detecting the pulling force and a pushing force sensor for detecting the pushing force with the reference value.

In a control method of a conveyance vehicle for conveying a conveyance body according to the claim 8 of the present application including one or more than two wheels rotated by rotation drive means by pulling or pushing a handle attached to the conveyance body, a conveyance vehicle control method is comprised of the steps of detecting conveying force acting on the handle, calculating a difference of conveying force by the thus detected conveying force and a reference value and rotating the rotation drive means by an amount corresponding to the difference.

Since the conveyance vehicle is constructed as mentioned before, in the conveyance vehicle according to the claim 1 of the present application, when the conveyance body is conveyed by pulling or pushing the handle, conveying force is detected by the force detecting means provided on the handle, conveying force and the previously-set reference value are compared with each other by the drive control means to which the detected signal is supplied and the signal corresponding to the resultant difference is outputted to the rotation drive means. Thus, since the wheels are rotated by the rotation drive means which is rotated in response to the difference between the conveying force and the previously-set reference value, someone who pulls the conveyance vehicle can constantly convey the conveyance vehicle by pulling or pushing the conveyance vehicle with constant conveying force (pulling force or pushing force).

In the conveyance vehicle according the claim 2 of the present application, since the conveyance vehicle includes two drive wheels and one or two auxiliary wheels, it is possible to convey the conveyance vehicle stably.

In the conveyance vehicle according to the claim 3 of present application, since the force detecting means is provided on the upper portion of the handle, it is possible for someone to convey the conveyance vehicle with ease.

In the conveyance vehicle according to the claim 4 of the present application, since the radius of the wheel is larger than the difference in level, the conveyance vehicle can run on to the difference in level with ease.

In the conveyance vehicle according to the claim 5 of the present application, the electrostatic capacity sensor or the strain sensor which is simple kin structure and which is easy to handle can be used as the force detecting means and hence the structure of the conveyance vehicle can be simplified and the cost of the conveyance vehicle can be decreased.

In the conveyance vehicle according to the claim 6 of the present application, since both of the pulling force and the pushing force acting on the handle can be detected by the two force sensors, it is possible to assist power not only when the conveyance vehicle is pulled but also when the conveyance vehicle is pushed.

In the conveyance vehicle according to the claim 7 of the present application, since the control means compares the detected value based on the detected signal supplied from the pulling force sensor or the pushing force sensor with the reference value and controls the conveyance vehicle so that the pulling force or the pushing force may become close to the reference value, the pulling force or the pushing force of someone who pulls or pushes the conveyance vehicle can be decreased to zero or a predetermined small value and hence load imposed on the operator can be alleviated or decreased to zero.

In the conveyance vehicle control method according to the claim 8 of the present application, since the conveying force is detected by the force detecting means provided on the handle and the drive control means to which the detected signal is supplied compares the conveying force and the previously-set reference value and outputs the signal corresponding to the difference to the rotation drive means, the wheels can be rotated by the rotation drive means which is driven in response to the difference between the conveying force and the previously-set reference value and it is possible to convey the conveyance vehicle by constantly making force of someone who pulls the conveyance vehicle become constant conveying force (pulling force or pushing force).

### BRIEF DESCRIPTION OF DRAWINGS

FIG. 1A is a side view showing a conveyance vehicle according to a first embodiment of the present invention;
FIG. 1B is a front view showing a conveyance vehicle according to a first embodiment of the present invention;
FIG. 2A is a cross-sectional side view of a main portion showing the conveyance vehicle of FIG. 1;
FIG. 2B is a cross-sectional view taken along the line U - U in FIG. 2A;
FIG. 3 is a cross-sectional view showing a main portion of FIG. 2B in an enlarged-scale;
FIG. 4 is an explanatory diagram showing a main portion of FIG. 3 in a more enlarged-scale;
FIG. 5 is a circuit diagram showing a floating detecting means of a conveyance vehicle according to an embodiment of the present invention;
FIG. 6 is a front view showing a force detecting means of a conveyance detecting means according to an embodiment of the present invention;
FIG. 7 is a cross-sectional view taken along the line V - V in FIG. 6;
FIG. 8 is an explanatory diagram showing the force detecting means in FIG. 6 in an enlarged-scale;
FIG. 9 is a circuit diagram showing the force detecting means in FIG. 6;
FIG. 10 is an explanatory diagram showing the force detecting means of the conveyance vehicle according to a second embodiment of the present invention in a cross-sectional fashion;
FIG. 11 is a circuit diagram showing the force detecting means shown in FIG. 10;
FIG. 12 is a front view showing a force detecting means of the conveyance vehicle according to a third embodiment of the present invention;
FIG. 13 is a cross-sectional view taken along the line W - W of the force detecting means shown in FIG. 12;
FIG. 14A is a front view showing a main portion of the force detecting means in FIG. 12 in an enlarged-scale;
FIG. 14B is a cross-sectional view taken along the line X - X in FIG. 14;
FIG. 15 is a circuit diagram of the force detecting means shown in FIG. 12;
FIG. 16 is a circuit diagram of a control apparatus of the conveyance vehicle according to the present invention;
FIG. 17 is a block diagram showing a control arrangement of the control apparatus shown in FIG. 16;
FIG. 18 is a front view showing a force detecting means of a conveyance vehicle according to a fourth embodiment of the present invention;
FIG. 19 is a cross-sectional view taken along the line Y - Y of the force detecting means shown in FIG. 18;
FIG. 20 is a diagram to which reference will be made in explaining operations of the conveyance vehicle according to the present invention and illustrates the state in which the conveyance vehicle is to be controlled on the level ground;
FIG. 21 is a diagram to which reference will be made in explaining operations of the conveyance vehicle according to the present invention and illustrates the state in which the conveyance vehicle is to be controlled when the conveyance vehicle is lifted;
FIG. 22 is a diagram to which reference will be made in explaining operations of the conveyance vehicle according to the present invention and illustrates the state in which the conveyance vehicle is to be controlled when the conveyance vehicle runs on to the difference in level;
FIG. 23 is a diagram to which reference will be made in explaining operations of the conveyance vehicle according to the present invention and illustrates the state in which the conveyance vehicle ascends the steps;
FIG. 24 is a diagram to which reference will be made in explaining operations of the conveyance vehicle according to the present invention and illustrates the state in which the conveyance vehicle descends the steps;
FIG. 25A is a side view showing a conveyance vehicle according to a second embodiment of the present invention and illustrates the conveyance vehicle by which someone can travel;
FIG. 25B is a front view showing a conveyance vehicle according to a second embodiment of the present invention and illustrates the conveyance vehicle by which someone can travel; and
FIG. 25C is a view on an arrow Z in FIG. 25B.

### BEST MODE FOR CARRYING OUT THE INVENTION

Embodiments of the present invention will be described below with reference to the accompanying drawings.

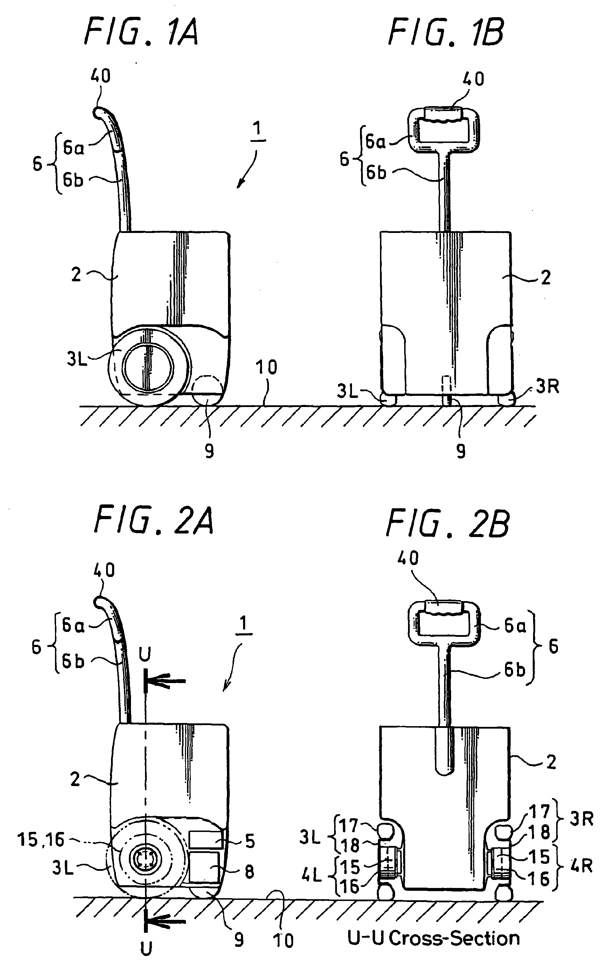

As shown in FIGS. 1A, 1B and FIGS. 2A, 2B, a conveyance vehicle 1, which shows a first embodiment of the present invention, is composed of a conveyance body 2 to convey something, two drive wheels 3L, 3R, wheel drive units 4L, 4R, which show a specific example of a rotary drive means, a vehicle control unit 5 serving as a drive control means for rotating this wheel drive unit 4 (4L, 4R), a handle 6 attached to the conveyance body 2, a force sensor 7 which shows a first embodiment of a force detecting means provided on this handle 6, a battery 8 which shows a specific example of a power supply, an auxiliary wheel 9 and the like.

The conveyance body 2 is composed of a housing which is slightly longer than it is wide and which housing is opened in the top surface to carry something. The left and right wheels 3L, 3R are disposed at both side portions of the front side which is the front of this conveyance vehicle 2. Then, the auxiliary wheel 9 is located at the central portion of the left and right direction of the rear side of the conveyance body 2 so as to become freely rotatable. The left and right drive wheels 3L, 3R can be rotated by the wheel drive units 4L, 4R provided on the bottom portion of the conveyance body 2. This wheel drive unit 4 is composed of the left wheel drive unit to rotate the left drive wheel 3L and the right wheel drive unit to rotate the right drive wheel 3R. The arrangements of both of the left and right wheel drive units are identical to each other and hence the wheel drive unit 4L for rotating the left drive wheel 3L will be described as a representative.

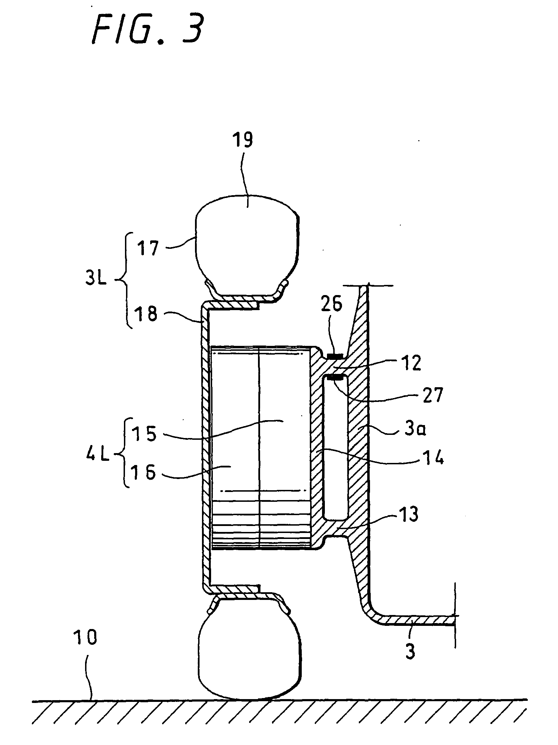

As shown in FIG. 3 in an enlarged-scale, the conveyance body 2 has a reinforcing portion 3a provided at two side portion of the front side of its bottom portion, the reinforcing portion being increased in thickness to increase strength so as to support the drive wheels 3L, 3R. The reinforcing portion 3a has two arm portions 12, 13 which are laterally projected with a proper spacing in the upper and lower direction substantially in parallel to each other. A motor supporting portion 14 is provided on the tip ends of the two arm portions 12, 13 substantially in parallel to the reinforcing portion 3a. The motor supporting portion 14 has a circular fixed portion of an electric motor fixed thereto. A rotary portion including a rotary shaft, not shown, is supported to the inside of the fixed portion of the electric motor 15 so as to become freely rotatable.

A DC motor, a synchronous motor, an induction motor and a stepping motor, for example, are suitably available as the electrically-powered motor 15 and it is needless to say that motors of other types can be applied to this electrically-powered motor. The electrically-powered motor 15 has a rotary shaft to which there is attached a decelerator 16 that can be properly decelerated by a suitable means such as a planet gear device. The decelerator 16 includes a rotating portion that has substantially the same size as that of a stationary portion of the electrically-powered motor 15. The drive wheel 3L is fixed to the outer end face of the rotating portion of this decelerator 16 by a fixing means such as fixing screws and thereby the drive wheel can be freely rotated in unison with the decelerator. A battery 8 is located at substantially the central portion of the conveyance body 2.

The two drive wheels 3L, 3R are the identical wheels having identical shape and arrangement and are composed of rubber tires 17 and wheels 18 having tires 17 attached to outer peripheral surfaces thereof. The tire 17 has large rigidity in the front and rear direction which is the flat surface side and has flexible characteristics in the radial direction which is the cross-sectional side. An inside space portion of the tire is formed as a fluid chamber 19. The fluid chamber19 of the tire 17 is filled with air that shows a specific example of fluid. Although it is preferable that air should be used as fluid filled into the tire 17, it is needless to say that gas other than air may be used such fluid.

While it is customary that the wheel 18 of each of the drive wheels 3L, 3R is made of a metal material such as aluminum alloy, it may be made of other metal materials. Further, the wheel can be made of other suitable materials than metals, such as plastic materials and wood.

The vehicle control unit 5 mounted on the conveyance body 2 is composed of an electronic circuit apparatus including a microcomputer. The microcomputer is composed of a combination of a central processing apparatus, a RAM and a ROM serving as program memories, an input and output interface serving as a peripheral apparatus and the like. A detected signal from a force sensor 7 is inputted to the microcomputer. Hence, the vehicle control unit 5 executes calculation processing previously set based on the detected signal and outputs a control signal to the electrically-powered motor 15 of the wheel driving unit 4, whereby the left and right drive wheels 3L, 3R can be rotated separately.

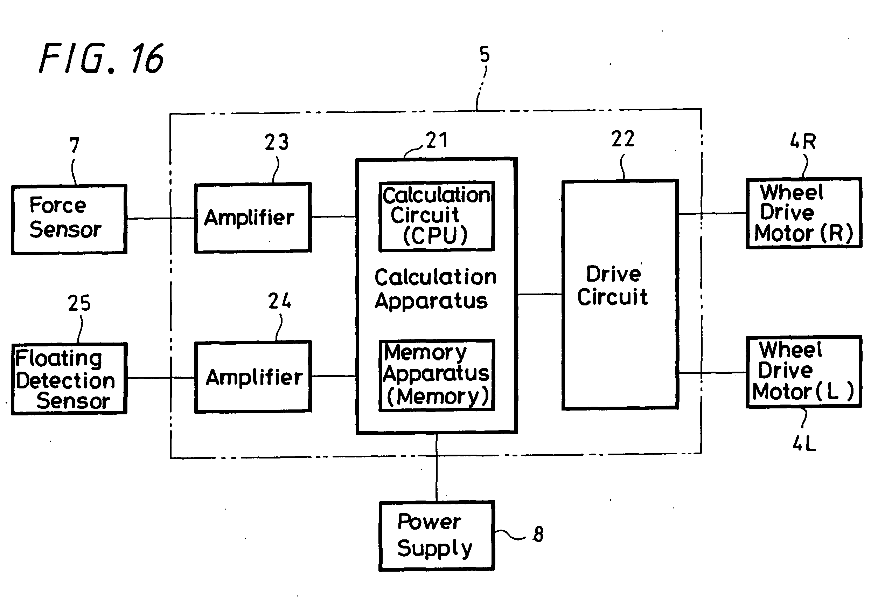

FIG. 16 is a block diagram showing a specific example of an arrangement of the vehicle control unit 5. This vehicle control unit 5 is composed of a calculation apparatus 21 including the above-described microcomputer, a drive circuit 22 for outputting a control signal in response to a signal outputted from this calculation apparatus 21 and two amplifiers 23, 24 connected to the calculation apparatus 21. The drive circuit 22 is separately connected to a left electrically-powered motor 4L for rotating the left drive wheel 3L and a right electrically-powered motor 4R for rotating the right drive wheel 3R.

The first amplifier 23 is connected with a force sensor 7 for detecting pulling power of the conveyance vehicle 1 and thereby a detected signal from the force sensor is amplified to a predetermined signal and supplied to the calculation apparatus 21. Also, the second amplifier 24 is connected with a floating detection sensor 25 for detecting that the wheels float up when the conveyance vehicle 1 is lifted and thereby a detected signal from this detection sensor is amplified to a predetermined signal and supplied to the calculation apparatus 1.

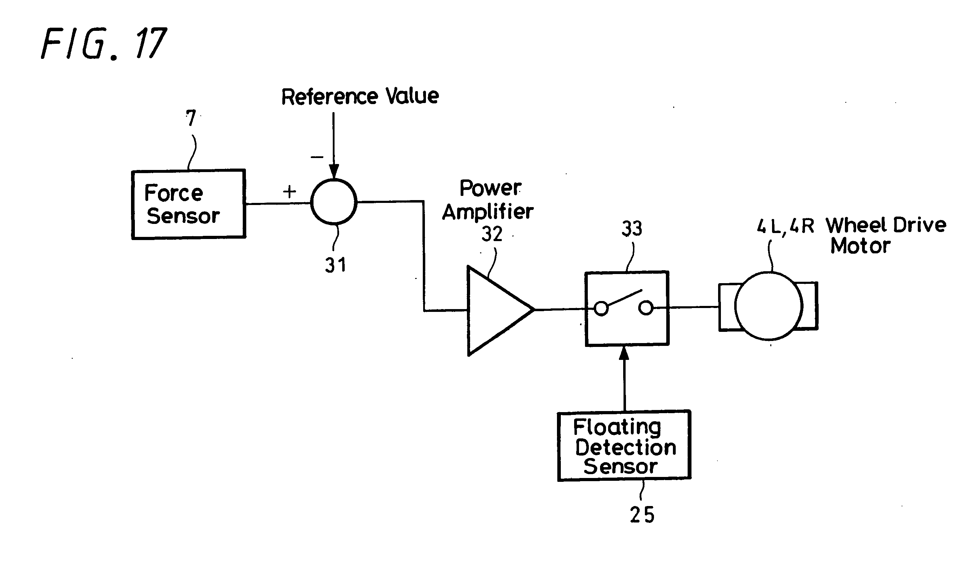

FIG. 17 is a diagram showing a specific example of the manner in which the wheels are driven under control of the vehicle control unit 5. A reference value shown in FIG. 17 can take any one of a positive value, a negative value or zero. The reference value can be properly set to a predetermined value based on whether the vehicle control unit includes either of or both of a pulling power sensor and a pushing power sensor. For example, even when the reference value is set to a proper value other than zero so that the vehicle control unit includes only one of the pulling power sensor and the pushing power sensor, the operator is able to easily move the conveyance vehicle 1 by small pulling power or very small pushing power.

Next, the case in which the vehicle control unit includes only the pulling power sensor will be described. In this case, the reference value is set to the positive value. In the state in which a switch 33 is closed and servo is effected, when the conveyance vehicle 1 is stopped in the state in which the operator who operates the handle 6 stands on the opposite side of the auxiliary wheel 9 relative to the handle 6, drive signals are supplied to the electrically-powered motors 4L, 4R mounted on the conveyance vehicle 1 in such a manner that the output signal from the pulling power sensor 7 and the reference value become equal to each other due to actions of servo. At that time, as the size of the reference signal is increased in the positive direction, force by which the operator pulls the conveyance vehicle 1 is increased.

When the operator is moved in the left direction in FIG. 1, the conveyance vehicle 1 is moved in the left hand direction in the sheet of drawing while the conveyance vehicle is producing pulling force corresponding to the above-mentioned reference value relative to the operator. When on the other hand the operator is moved in the right direction in FIG. 1, the conveyance vehicle 1 is moved in the right direction in the sheet of drawing while the conveyance vehicle is similarly producing pulling power corresponding to the above-mentioned reference value relative to the operator. That is, when the operation central point of the pulling force sensor 7 is offset, it becomes possible for the operator to move the conveyance vehicle 1 in both directions by small force. Although it becomes possible for the operator to move the conveyance vehicle 1 by smaller pulling force as the magnitude of this reference value becomes smaller, an amount in which the operation central point of the pulling force sensor 7 is offset is decreased and an operation margin relative to pushing force also is decreased so that the magnitude of the reference value should be properly determined in response to a balance between the pulling force and the operation margin.

According to the wheel drive control executed based on such reference value, the drive wheels are controlled such that pulling force detected by the force sensor 7 may constantly become a constant value, that is, a reference value of pulling force (for example, pulling force 1 kg). This control is executed by a circuit arrangement including a subtractor 31, a power amplifier 32 and a switch 33. The subtractor 31 subtracts a reference value from a detected value of the pulling force detected by the force sensor 7 and outputs a signal corresponding to a difference to the power amplifier 32. The power amplifier 32 amplifies a received signal and outputs an amplified signal to rotate the electrically-powered motors 4L, 4R for driving the wheels.

The power amplifier 32 and the electrically-powered motors 4L, 4R have interposed therebetween the switch 33 to cut off the driving of the electrically-powered motors 4L, 4R. This switch 33 is adapted to prevent the drive wheels 3L, 3R from running idle when the drive wheels 3L, 3R float up. When the float detection sensor 25 detects floating of the drive wheels 3L, 3R and outputs a detected signal, the switch 33 opens the circuit to stop the supply of power to the electrically-powered motors 4L, 4R. As a consequence, the drive wheels 3L, 3R are stopped rotating and the idling state of the drive wheels may be canceled.

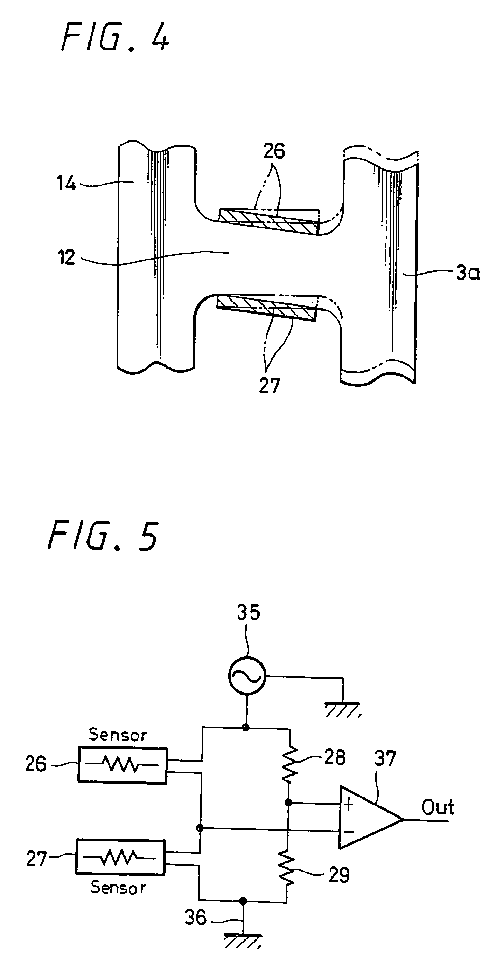

The floating detection sensor 25 is provided on the upper arm portion 12 of the conveyance body 2 as shown in FIGS. 3 and 4. This floating detection sensor 25 includes two strain gauges 26, 27 attached to both upper and lower surfaces of the upper arm 12 and has an arrangement shown in FIG. 5. The strain gauges 26, 27 are adapted to detect bending strain produced on the upper arm portion 12 by the weights of the drive wheels 3L, 3R when the respective drive wheels 3L, 3R are floated and suspended in midair. As the strain gauges 26, 27, there can be used a strain gauge effectively utilizing a resistance value changing due to expansion and contraction of metal, a piezoelectric element that generates a piezoelectric effect due to mechanical strain of crystal and the like, for example.

While the two strain gauges 26, 27 are the identical strain gauges, they are attached to the upper arm portion upside down and connected in series. The reason that the two identical strain gauges are used is to remove influence generated due to thermal expansion because bending degrees of the upper and lower surfaces of the upper arm portion become different when the upper arm portion 12 is deformed by heat. Accordingly, when influence imposed on the arm portion by thermal expansion need not be considered, the strain gauge may be attached to only one of the upper and lower surfaces. Also, the strain gauge may be attached to the lower arm portion 13 instead of the upper arm portion 12.

Two resistors 28, 29 are connected in series to the two strain gauges 26, 27 and these four parts are coupled in an annular fashion on the whole. An alternating current power supply 35 which is connected to the ground is connected between the first strain gauge 26 and the first resistor 28 and a ground line 36 is connected between the second strain gauge 27 and the second resistor 29. A plus terminal of the amplifier 37 is connected between the two strain gauges 26 and 27 and a minus terminal of this amplifier 37 is connected between the two resistors 28 and 29.

According to the floating detection sensor 25 having such arrangement, it is possible to detect the floating of the left and right drive wheels 3L, 3R as follows, for example. As shown in FIGS. 1 and 2, when the left and right drive wheels 3L, 3R are on the ground surface 10 so that the drive wheels 3L, 3R are neither floated, weights of the conveyance body 2 and the conveyed item are applied to the upper and lower arm portions 12, 13 so that, if force in the gravity direction is positive, then negative reaction force is applied from the ground surface 10 to the motor supporting portion 14 as seen from the reinforcing portion 3a, thereby resulting in the upper and lower arm portions 12, 13 being bent. As a consequence, signals corresponding to the bending amount of the upper arm portion 12 are outputted from the two strain gauges 26, 27 and thereby a weight greater than the conveyance body 2 of the negative direction is detected from the amplifier 37.

On the other hand, when the conveyance body 2 is lifted so that the drive wheels 3L, 3R are detached from the ground surface 10, loads of the drive wheels 3L, 3R act in the gravity direction and loaded onto the upper and lower arm portions 12, 13 with the result that the arm portion 12 is bent in response to the magnitude of its load. As a result, the signal corresponding to the bending amount of the arm portion 12 is outputted from the two strain gauges 26, 27. Consequently, a signal corresponding to the value of the detected signal outputted from the strain gauges 26, 27 is outputted from the amplifier 37. The output signal from the amplifier 37 becomes the weight of the drive wheels 3L, 3R of the positive direction relative to the gravity and direction and magnitude of the outputted signal are changed to detect the floating of the drive wheels. As a consequence, the switch 33 is opened in response to the value of the signal outputted from the amplifier 37 to stop the corresponding drive wheels 3L, 3R from rotating. In consequence, the idling state of the drive wheels 3L, 3R can be canceled.

The handle 6 with the force sensor 7 attached thereto consists of a square-like annular operation portion 6a and a shaft portion 6b continued to the lower side of this operation portion 6a. A lower end of the shaft portion 6b of the handle 6 is fixed to the fixed portion 2a a screwing means, a press fit means and other fixing means and thereby it is formed as one body with the conveyance body 2. A grip portion 40 made of a cylindrical resilient material is provided on the upper side of the operation portion 6a of this handle 6 so that the handle becomes easy to grip. The force center 7 is provided at substantially the central portion of this grip portion 40.

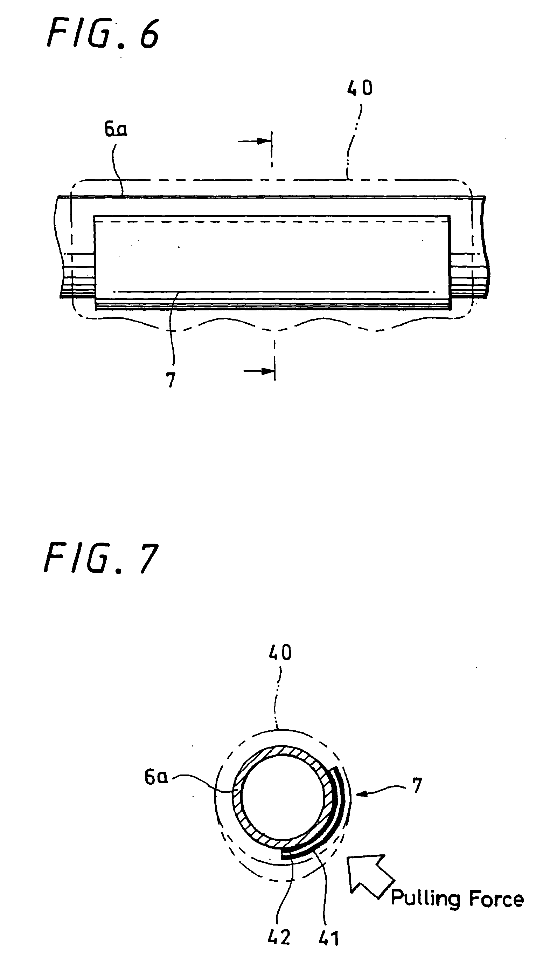

The force sensor 7 has an arrangement shown in FIGS. 6, 7 and 8. This force sensor 7 is a force sensor of an electrostatic capacity type and it is composed of two sheet-like electrodes 41, 42 and a spacer 43 for setting a predetermined clearance between the two electrodes 41 and 42. The two electrodes 41, 42 are connected with lead wires 48, 49 and the two electrodes 41, 42 are connected to the power supply through the two lead wires 48, 49. This force sensor 7 is attached to the handle in such a manner that it may be attached to the outer peripheral surface of the pipe of the operation portion 6a. At that time, the central portion of the force sensor 7 is set to the portion on which force of hand acts most strongly when the operator pulls the handle.

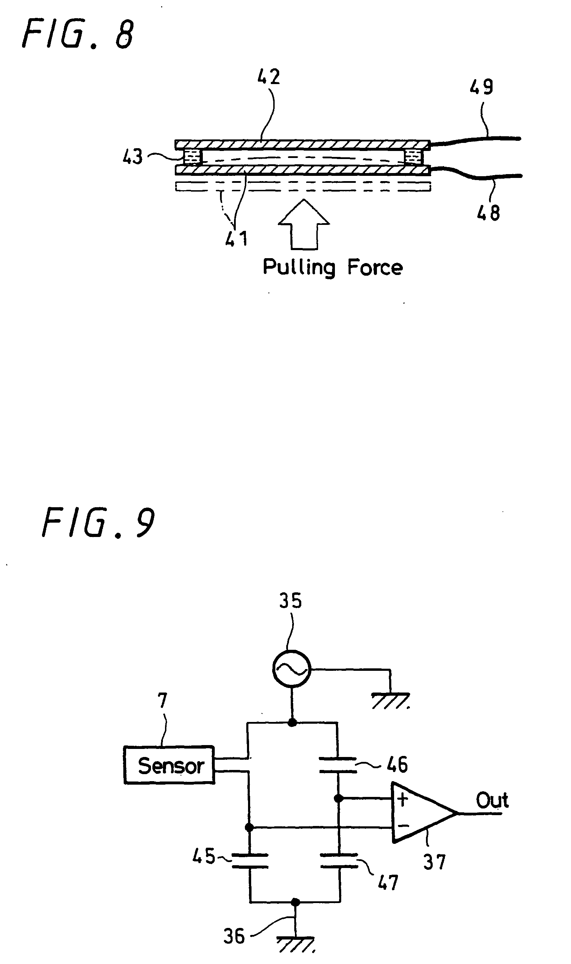

FIG. 9 is a diagram of an electric circuit to use the force sensor 7 having the above arrangement. The force sensor 7 and three capacitors 45, 46, 47 are connected in series to form an annular shape. This circuit arrangement is identical to that shown in FIG. 5 in which the second force sensor 27 and the two resistors 28, 29 are replaced with capacitors. A rest of arrangement is similar. According to this embodiment, when the operator pulls the conveyance vehicle 1 with the grip portion 40, a distance between the two electrodes 41 and 42 is decreased in response to the magnitude of such pulling force. As a result, since electrostatic capacity is changed as a distance between the electrodes 41 and 42 is varied, it is possible to detect the magnitude of pulling force by using the change of the electrostatic capacity.

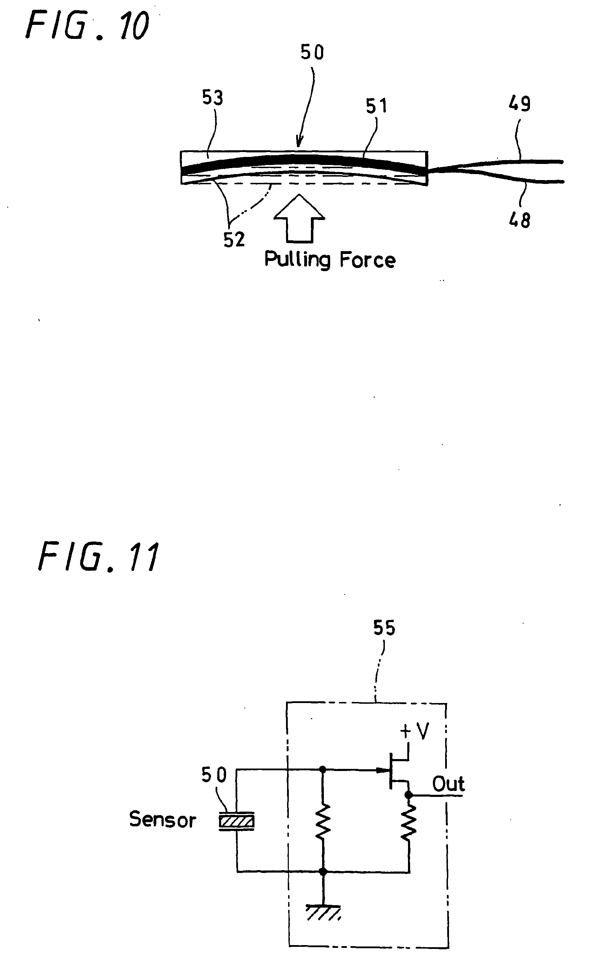

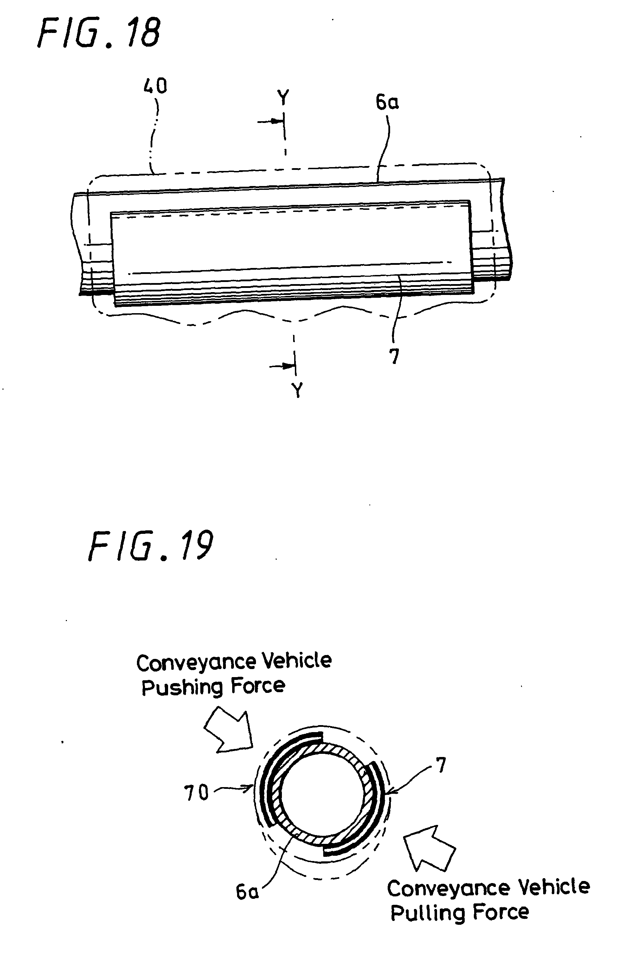

A force sensor 50 shown in FIG. 19 has an arrangement in which a film-like piezoelectric material 51 such as a piezo-film is sandwiched by two film-like resilient films 52, 53. A rest of arrangement is similar to that of the embodiment shown in FIG. 8. FIG. 11 is a diagram of an electric circuit to use this force sensor 50. The force sensor 50 having such arrangement is able to detect pulling force when it is combined with only an amplifier 55 shown in the sheet of drawing.

According to the case of this embodiment, it is possible to detect pulling force applied through the grip portion to the force sensor 50 by measuring potential generated from the piezoelectric material 51 which is flexed with application of pulling force (external force).

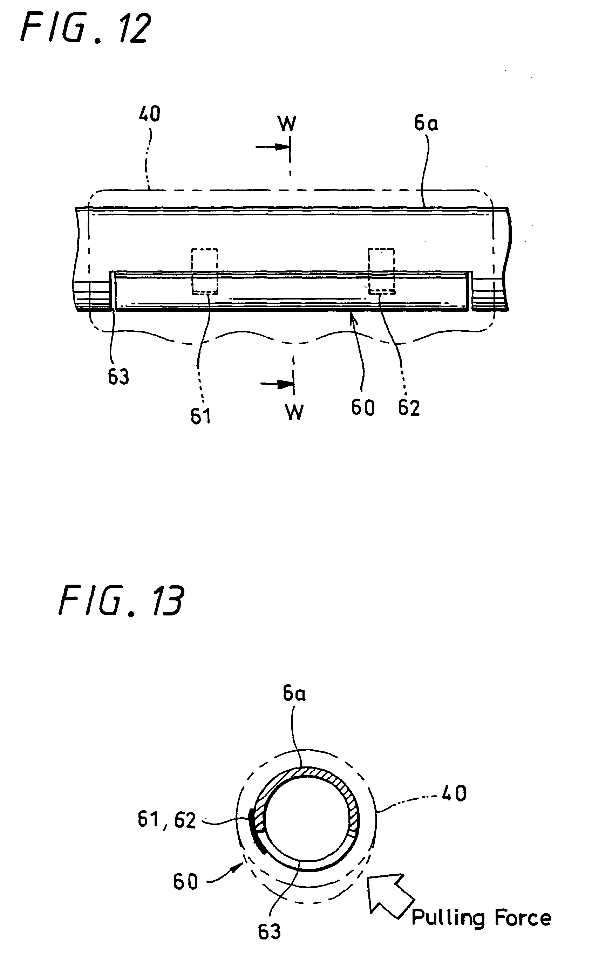

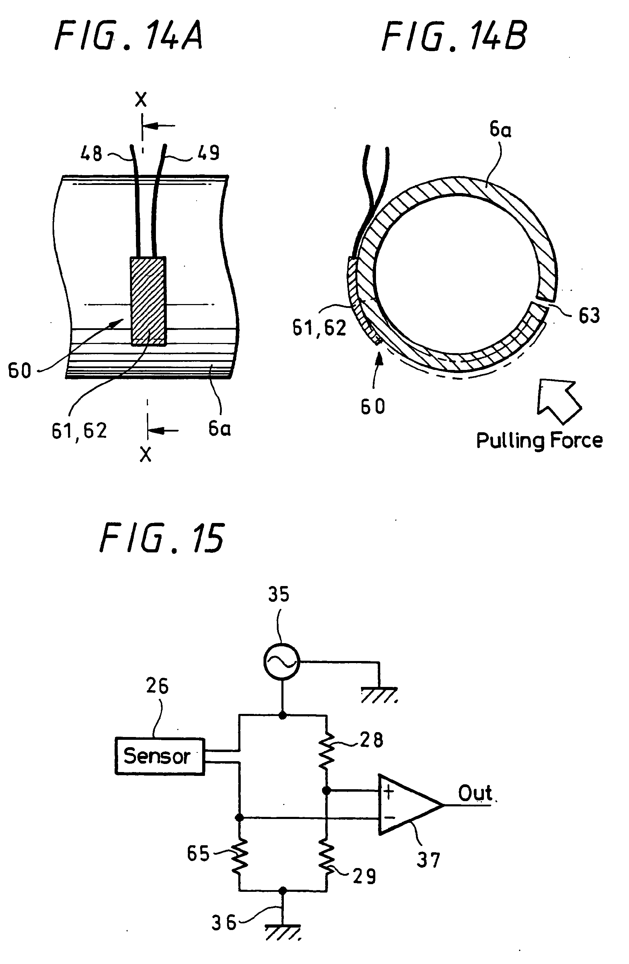

A force sensor 60 shown in FIGS. 12 and 13 is able to detect pulling force by stain gauges 61, 62. Then, in order to increase detection accuracy of pulling force, a U-like recess 63 is formed on the operation portion 6a and two strain gauges 61, 61 are attached to the force sensor at its side opposite to the recess 63 as shown in FIGS. 14A, 14B. A rest of arrangement is similar to that of the embodiment shown in FIG. 6. The reason that the force sensor includes the two strain gauges 61, 62 is to increase stability of detection accuracy of pulling force and it is needless to say that the force sensor can be composed of only one strain gauge.

According to the case of this embodiment, since the recess 63 is formed on the operation portion 6a, it is possible to considerably flex the recessed portion by relatively small pulling force (external force). For this reason, it is possible to obtain the force sensor which is high in detection accuracy although it is simple in structure. In addition, the strain gauge can be attached to a desired place, for example, the strain gauge can be attached to the shaft portion 6a to detect the magnitude of pulling force from bending strain.

FIG. 15 is a diagram of a circuit arrangement to use the force sensor 60 having the above arrangement. This electric circuit differs from the electric circuit shown in FIG. 5 in that the second force sensor 27 is replaced with a third resistor 65. A rest of arrangement is similar. According to the above arrangement, it is possible to achieve effects similar to those of the above-described embodiment.

A force sensor 70 shown in FIGS. 18 and 19 is able to similarly detect pushing force applied to the handle in addition to pulling force applied to the handle 6 of the conveyance vehicle 1. Specifically, in addition to the arrangement of the embodiments shown in FIGS. 6 and 7, the second force sensor 70 having the arrangement identical to that of the force sensor 7 is attached to the position of the opposite side so as to oppose the force sensor 7 to which pushing force of the operation portion 6a is applied.

In the case of this embodiment, power can be assisted not only with application of auxiliary power produced by pushing the handle 6 but also when the conveyance vehicle is pulled by pulling the handle 6 of the conveyance vehicle. That is, it is possible to detect pushing force by pushing the conveyance vehicle 1 with the handle 6. As a result, the drive wheels 3L, 3R can be rotated in the advancing direction through driving of the electrically-powered motors 4L, 4R to thereby assist pushing force to push the conveyance vehicle 1. In this case, pushing force can be assisted on the flat portion of the ground surface in response to pushing force, whereby the conveyance vehicle 1 can be constantly conveyed with constant pulling force when it descends the steps, which will be described later on.

Actions of this embodiment will be described below in detail. Actions of this embodiment will be described with reference to the case in which the two force sensors 7, 70 shown in this embodiment is applied to the conveyance vehicle shown in FIG. 1 and the like. First, let us describe the case in which an operator who operates the handle 6 stands on the opposite side of the auxiliary wheel 9 in relation to the handle 6 and operates the pulling force sensor (first force sensor) 7 or the pushing force sensor (second force sensor) provided on the grip portion 40 in the state in which the switch 33 is closed and servo is effected.

First, the case in which the reference value is zero will be described. In FIG. 1, when the operator is moved in the left direction, the conveyance vehicle 1 is pulled by the operator. In this case, a signal of magnitude corresponding to force for pulling the conveyance vehicle 1 (for example, positive polarity signal) is outputted from the pulling force sensor 7. A drive signal is outputted based on a signal obtained after the reference value was subtracted from this signal, whereby the electrically-powered motors 4L, 4R which move the conveyance vehicle 1 are rotated.

Since the control system shown in FIG. 17 constructs a feedback control system, the electrically-powered motors 4L, 4R are driven in such a manner that magnitude of the output signal from the pulling force sensor 7 may become equal to the reference value, that is, the pulling force may become zero. As a result, load imposed on someone who pulls the conveyance vehicle 1 can be decreased and someone who pulls the conveyance vehicle 1 can move the conveyance vehicle 1 with substantially zero pulling force.

On the other hand, when the operator who operates the handle 6 stands on the opposite side of the auxiliary wheel 9 in relation to the handle 6 and is moved in the right direction in FIG. 1, a negative polarity signal of magnitude corresponding to force for pushing the conveyance vehicle 1 is outputted from the pushing force sensor 70. A drive signal is outputted based on a signal obtained after the reference value was subtracted from this signal, whereby the electrically-powered motors 4L, 4R which move the conveyance vehicle 1 are rotated. As a result, the electrically-powered motors 4L, 4R are driven in such a manner that magnitude of the output signal from the pushing force sensor 70 may become equal to the reference value, that is, the pushing force may become zero. Thus, load imposed on someone who pushes the conveyance vehicle 1 can be decreased so that someone who pushes the conveyance vehicle 1 can move the conveyance vehicle 1 with substantially zero pushing force.

When the conveyance vehicle includes both of the pulling force sensor 7 and the pushing force sensor 70 as described above, the control system shown in FIG. 17 can act on both of pulling force and pushing force. On the other hand, when the conveyance vehicle 1 includes only the pulling force sensor 7, the control system can act on only the pulling force. Similarly, when the conveyance vehicle includes only the pushing force sensor 70, the control system can act on only the pushing force. As a result, if the conveyance vehicle includes only the pulling force sensor 7, then since servo is not assisted when the conveyance vehicle 1 is pushed, large pushing force is required. Similarly, if the conveyance vehicle includes only the pushing force sensor 70, then since servo is not assisted when the conveyance vehicle 1 is pulled, large pulling force is required.

As described above, when the conveyance vehicle includes only the pushing force sensor 70, similarly to the case in which the conveyance vehicle includes only the pulling force sensor 7, only the polarity of the signal of each unit is changed to that of the pulling force and the pulling force is changed to the pushing force and similar actions can be achieved. That is, when the negative signal is supplied as the reference signal, while pushing forces corresponding to the magnitude of the reference signal is being generated, it becomes possible to move the conveyance vehicle 1 in the two directions by very small force corresponding to the reference value.

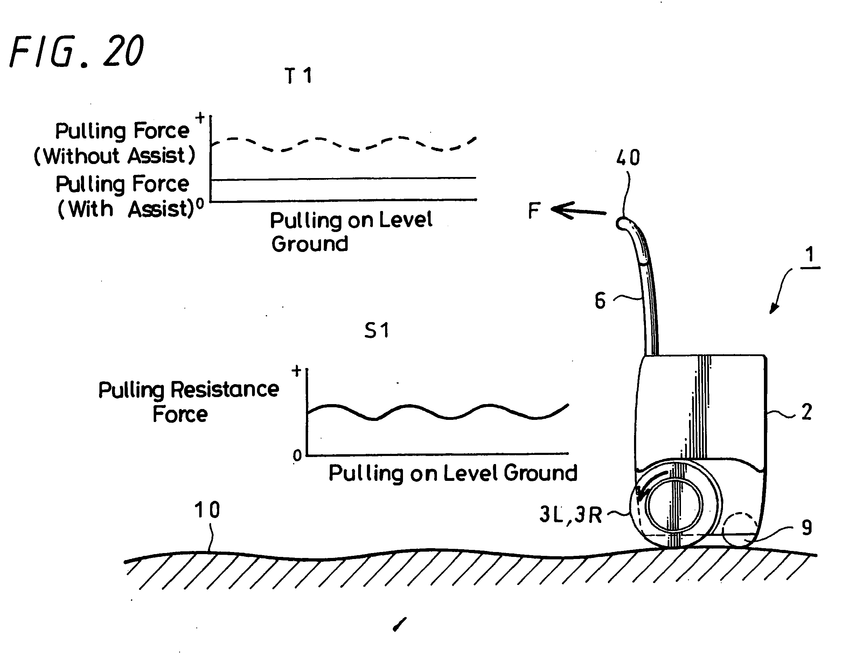

FIGS. 20 to 24 are diagrams to which reference will be made in explaining the controlled states of the conveyance vehicle 1 on various kinds of road surfaces. FIG. 20 shows the controlled state of the conveyance vehicle on a relatively flat road surface. In general, when someone pulls the conveyance vehicle 1, force containing resistance force obtained from the weight of the conveyed material on the conveyance body 2, wobbling of the road surface 10 and the like becomes necessary as pulling force. Accordingly, by the force sensor 7 housed within the grip portion 40 of the handle 6, the electrically-powered motors 4L, 4R are driven in such a manner that force applied to someone who pulls the conveyance vehicle may become previously-set predetermined pulling force (for example, 1 kg), thereby resulting in the drive wheels 3L, 3R being rotated in the advancing direction (left direction in FIG. 20).

As a result, the pulling force of someone who pulls the conveyance vehicle may be assisted and hence someone can pull the conveyance vehicle 1 by force smaller than that required when pulling force is not assisted. For example, when force which someone receives is set to 1 kg, load of pulling force of 1 kg is constantly applied to someone so that pulling force can constantly be maintained at 1 kg no matter how load of the conveyance vehicle 1 is fluctuated.

In FIG. 20, a graph S1 shows a relationship of pulling resistance force relative to the road surface. In this case, pulling resistance force is changed in response to the change of the road surface. When the conveyance vehicle descends from the high position of the road surface to the low position, the pulling resistance force also is decreased in response to such change. Conversely, when the conveyance vehicle ascends from the low position to the high position, the pulling resistance force also is increased in response to such change. A graph T1 shows the pulling fore obtained at that time. Although the pulling force becomes equal to the pulling resistance force without the aforementioned power assist, according to the case of the present invention, pulling force F becomes constantly a constant value.

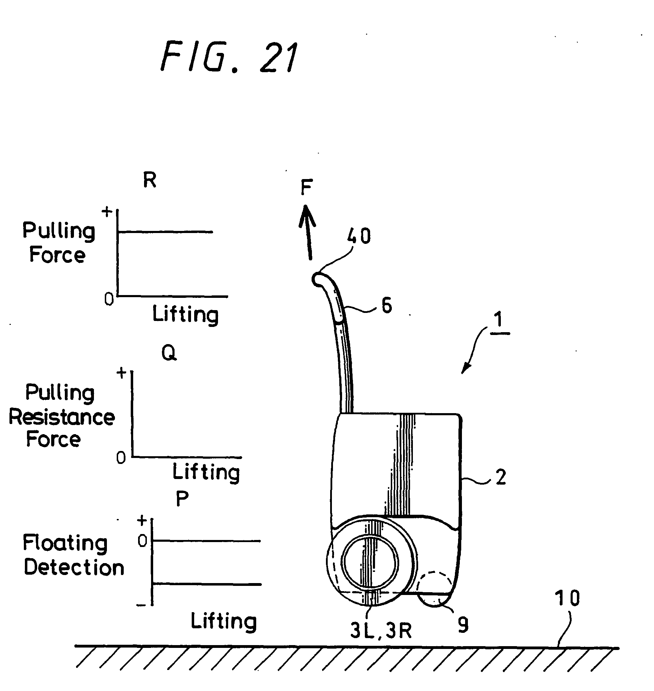

FIG. 21 is a diagram showing the controlled state required when someone lifts the conveyance vehicle 1. When someone lift the conveyance vehicle 1 so that the drive wheels 3L, 3R are floated from the road surface 10, pulling force is detected by the force sensor 7 housed within the grip portion 40 and the state in which the drive wheels 3L, 3R are floated from the road surface 10 is detected by the floating detection sensor 25 at the same time. Thus, while the vehicle control unit 5 outputs the signal to drive the drive wheels 3L, 3R in response to the detected signal from the force sensor 7, at the same time, driving of the drive wheels 3L, 3R is interrupted by the detected signal from the floating detection sensor 25. Therefore, the drive wheels 3L, 3R can be prevented from being rotated.

In FIG. 21, a graph P shows a detected signal from the floating detection sensor 25. In this case, a signal indicating the state in which the drive wheels 3L, 3R are floated from the road surface 10 is outputted from the floating detection sensor. A graph Q shows pulling resistance force. In this case, the pulling resistance force is zero. Also, a graph R shows a detected signal from the force sensor 7. In this case, a signal indicating the state in which the conveyance vehicle is pulled is outputted from the force sensor.

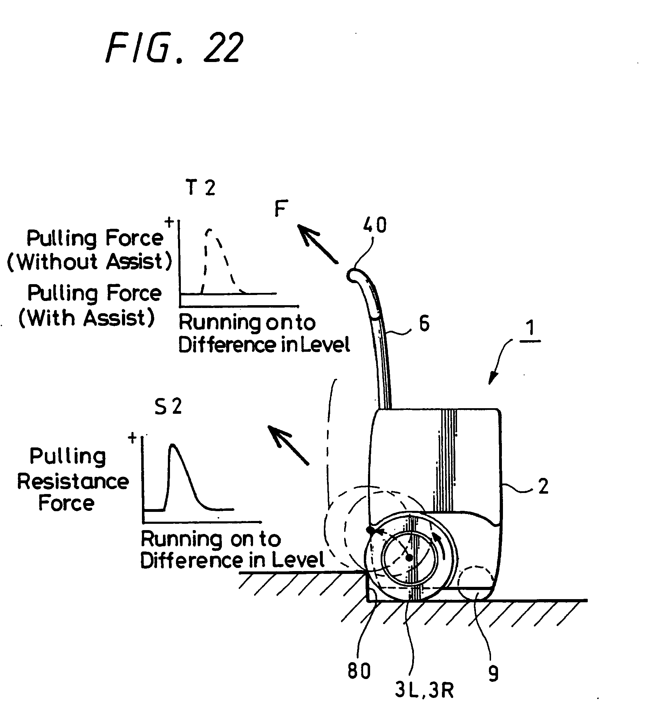

FIG. 22 is a diagram showing the controlled state required when the conveyance vehicle 1 runs on to a difference in level 80. When the conveyance vehicle 1 runs on to the difference in level 80, large pulling resistance force acts as shown in the graph S2 so that large pulling force is required as shown in the graph T2. Under control of the force sensor 7 housed within the grip portion 40 of the handle 6, the electrically-powered motors 4L, 4R are driven such that force applied to someone who pulls the conveyance vehicle may become previously-set predetermined pulling force, thereby resulting in the drive wheels 3L, 3R being rotated in the advancing direction (left direction in FIG. 22). Thus, the pulling force of someone who pulls the conveyance vehicle can be assisted and hence someone can pull the conveyance vehicle 1 by the constant pulling force F smaller than that required when pulling force is not assisted.

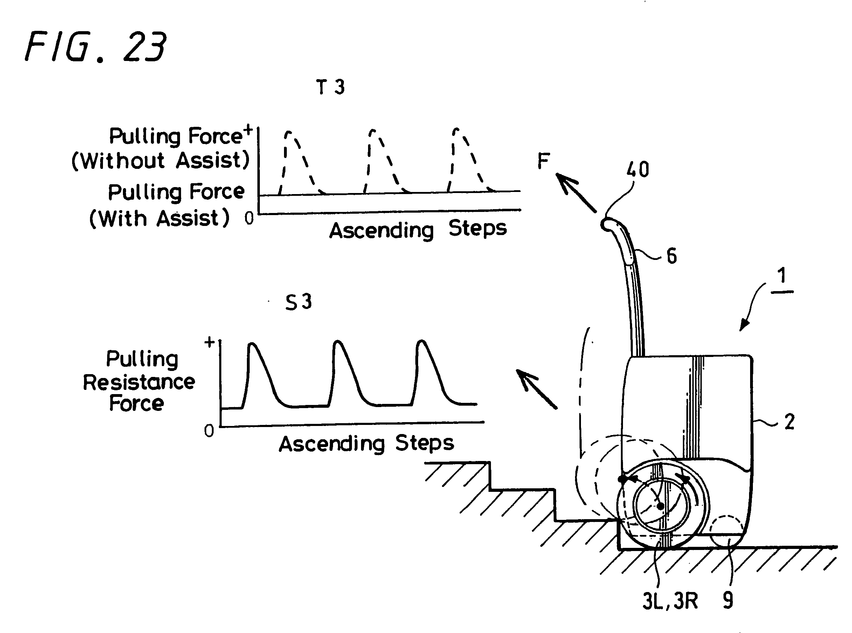

FIG. 23 is a diagram showing the controlled state required when the conveyance vehicle 1 ascends the step 81. When the conveyance vehicle 1 ascends the step 81, large pulling resistance force acts repeatedly as shown in a graph S3 so that large pulling force is required intermittently as shown in a graph T3. Under control of the force sensor 7 housed within the grip portion 40 of the handle 6, the electrically-powered motors 4L, 4R are driven such that force applied to someone who pulls the conveyance vehicle may become previously-set predetermined pulling force, thereby resulting in the drive wheels 3L, 3R being rotated in the advancing direction (left direction in FIG. 22). Thus, the pulling force of someone who pulls the conveyance vehicle can be assisted and hence someone can pull the conveyance vehicle 1 by the constant pulling force F smaller than that required when pulling force is not assisted.

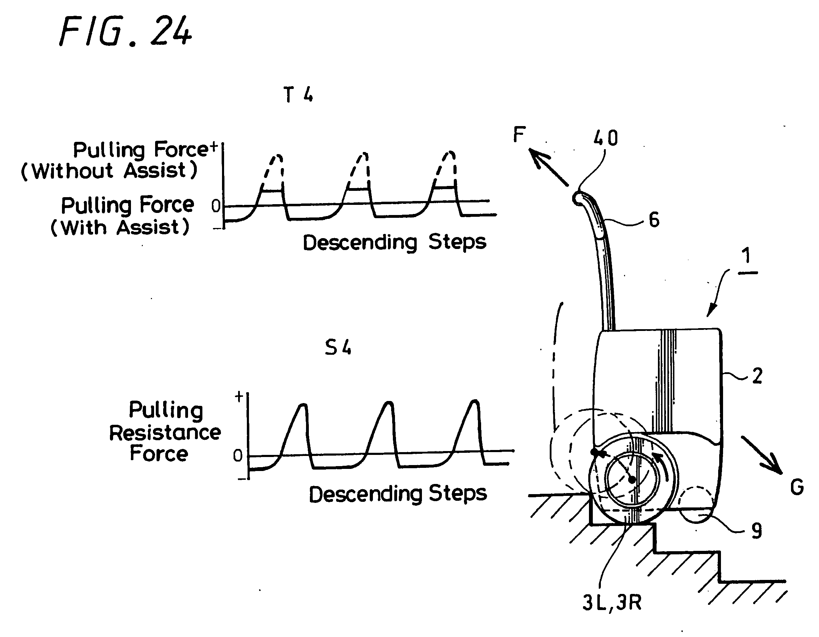

FIG. 24 is a diagram showing the controlled state required when the conveyance vehicle 1 descends the step 81. When the conveyance vehicle 1 descends the step 81, the handle 6 is pushed in the flat portion of the step 81 as shown in a graph S4 so that pulling force (tractive force) is not detected by the force sensor 7 housed within the grip portion 40 of the handle 6. Therefore, the drive wheels 3L, 3R are not driven by the electrically-powered motors 4L, 4R and the conveyance vehicle is pushed and conveyed by only man's force. Next, when the conveyance vehicle comes near the difference in level of the step 81, while force G for allowing the conveyance vehicle 1 to descend owing to its own weight acts on the conveyance vehicle, force for supporting the conveyance vehicle acts on the handle 6.

At that time, under control of the force sensor 7 housed within the grip portion 40 of the handle 6, the electrically-powered motors 4L, 4R are driven in such a manner that force applied to someone who pulls the conveyance vehicle may become previously-set predetermined pulling force, thereby resulting in the drive wheels 3L, 3R being intermittently rotated in the retreating direction (left direction in FIG. 24). Thus, pulling force of someone who pulls the conveyance vehicle can be assisted and hence the conveyance vehicle can descend the step 81 while the conveyance vehicle 1 is intermittently being driven by pulling force smaller than that required when pulling force is not assisted.

In FIG. 24, a graph S4 shows a relationship of pulling resistance force relative to the road surface. In this case, although the pulling resistance force is held at a constant low value on the flat portion of the step 81, the pulling resistance force rapidly rises at the difference in level portion and becomes a large value. When the conveyance vehicle reaches the flat portion of one step below the difference in level portion, the pulling resistance force is rapidly lowered and returned to the constant low value. A graph T4 shows the pulling force F relative to such pulling resistance force. The pulling force in this case is placed in the state in which the portion higher than the constant value is cut from the pulling resistance force. Hence, the pulling force F can be constantly maintained at a value lower than the constant value.

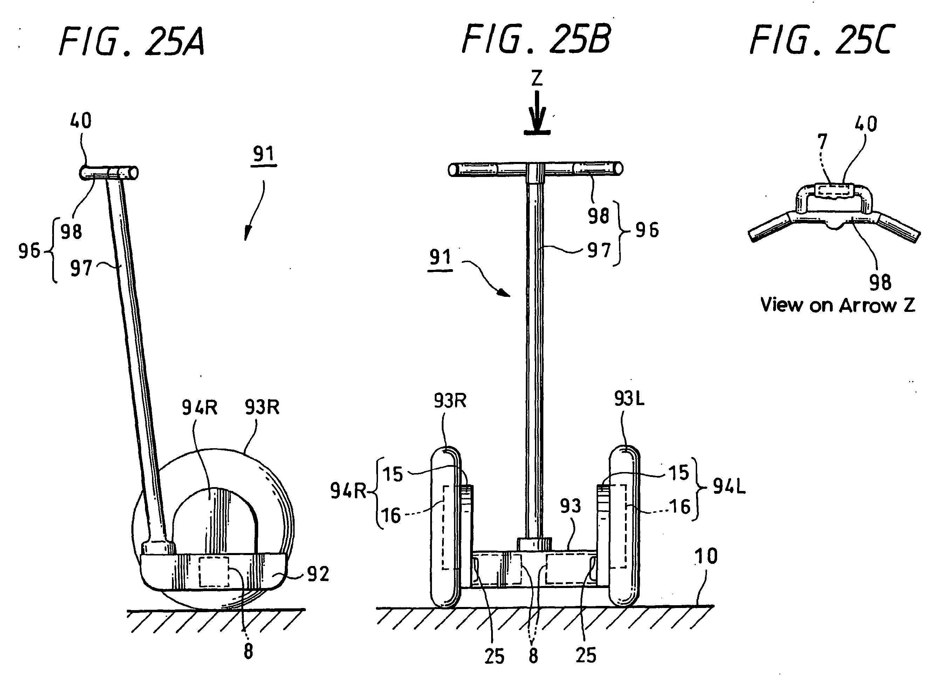

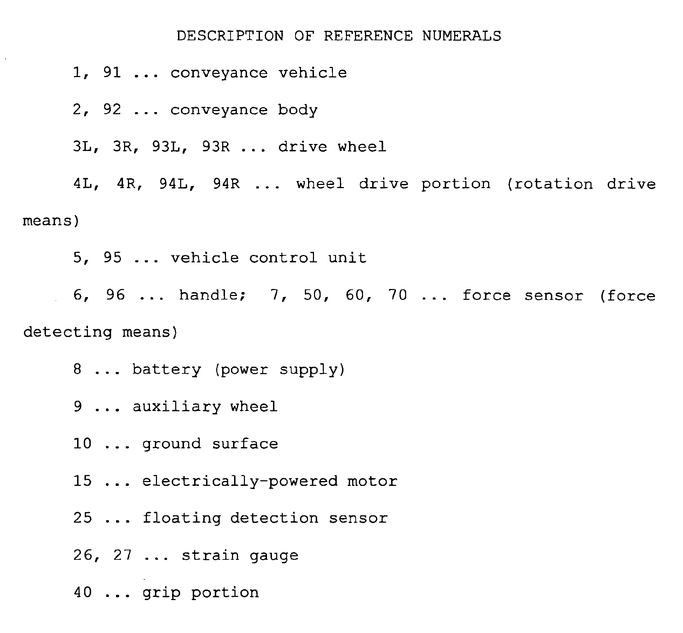

As shown in FIGS. 25A, 25B and 25C, a conveyance vehicle 91 which shows a second embodiment of the present invention is constructed so as to enable someone to travel in the conveyance vehicle. This conveyance vehicle 91 is composed of a conveyance body 2, two drive wheels 93L, 93R, two wheel drive portions 94L, 94R provided in response to the two drive wheels 93L, 93R, a vehicle control unit 95 for controlling these wheel drive portions 94L, 94R, a handle 96 attached to the conveyance body 92, the force sensor 7 provided on the handle 96, a battery 8, the floating detection sensor 25 and the like. The wheel drive portions 94L, 94R, the force sensor 7, the battery 8 and the floating detection sensor 25 are similar to those of the aforementioned embodiment and therefore need not be described.

The conveyance body 92 is composed of a flat plate-like member on which someone can ride. The left and right drive wheels 93L, 93R are located at the central portions of both sides of the conveyance body 92. The left and right drive wheels 93L, 93R can be rotated by the wheel drive portions 94L, 94R provided on the side surface portions of the conveyance body 92. The battery 8 is housed within this conveyance body 92 and a pair of floating detection sensors 25 corresponding to the respective drive wheels 93L, 93R is provided on the conveyance body.

The handle 96 is composed of a shaft portion 97 whose lower end is fixed to the front portion of the conveyance body 92 and which is elongated in the upper direction and an operation portion 98 integrally provided on the upper end of this shaft portion 97. An annular portion 98a is provided on the operation portion 98 and the grip portion 40 having the force sensor 7 housed therein is provided on this annular portion 98a.

Also in the conveyance vehicle 91 having the above arrangement, by executing the aforementioned controls of the drive wheels 93L, 93R, it is possible to easily pull and move the conveyance vehicle 91 when someone gets off the conveyance vehicle.

The present invention is not limited to the aforementioned embodiments shown in the sheet of drawings. For example, while the present invention is applied to a tricycle and a bicycle in the above-described embodiments, the present invention is not limited thereto and can be applied to a four-wheeled vehicle and a vehicle having more wheels than the four wheels. As described above, the present invention can be variously modified and effected without departing from the gist thereof.

## Claims

1. A conveyance vehicle comprising:
one or more than two wheels;
rotation drive means for rotating said one or more than two wheels;
a conveyance body having said rotation drive means mounted thereon;
a handle for applying conveying force to said conveyance body;
force detecting means for detecting conveying force acting on said handle; and
drive control means for controlling driving of said rotation drive means based on a detected signal from said force detecting means.

2. A conveyance vehicle according to claim 1, wherein said wheels are composed of two drive wheels located on the same axis at both left and right sides of said conveyance body and one or two auxiliary wheels located at the front side or back side of said two drive wheels.

3. A conveyance vehicle according to claim 1, wherein said handle is provided on the upper portion of said conveyance body so as to project in the upper direction, said force detecting means being provided on the upper portion of said handle.

4. A conveyance vehicle according to claim 1, wherein said wheels have radiuses larger than steps of a ground surface.

5. A conveyance vehicle according to claim 1, wherein said force detecting means is either an electrostatic capacity sensor of which electrostatic capacity is changed in response to magnitude of said conveying force or a strain sensor of which strain amount is changed in response to magnitude of strain.

6. A conveyance vehicle according to claim 1, wherein said force detecting means includes a force sensor for detecting pulling force acting on said handle and a force sensor for detecting pushing force acting on said handle.

7. A conveyance vehicle according to claim 1, wherein said drive control means includes memory means for previously storing therein a previously-set reference value which becomes at least one standard of pulling force and pushing force acting on said handle and control means for making pulling force or pushing force become a reference value by comparing a detected signal based on at least one detected signal of a pulling force sensor for detecting said pulling force and a pushing force sensor for detecting said pushing force with said reference value.

8. A control method of a conveyance vehicle for conveying a conveyance body including one or more than two wheels rotated by rotation drive means by pulling or pushing a handle attached to said conveyance body, a conveyance vehicle control method comprising the steps of detecting conveying force acting on said handle, calculating a difference of conveying force by the thus detected conveying force and a reference value and rotating said rotation drive means by an amount corresponding to said difference.
